# EUROPÄISCHE PATENTSCHRIFT

(11) **EP 0 574 665 B1**
(45) Veröffentlichungstag und Bekanntmachung des Hinweises auf die Patenterteilung: **05.06.1996**
(21) Anmeldenummer: 93106038.8
(22) Anmeldetag: 14.04.1993
(51) Int. Cl.: C08F 12/08, C08J 9/20

(54) **Verfahren zur Herstellung von perlförmigen expandierbaren Styrolpolymerisaten**
Process for producing pearl-shaped expandable styrenic polymers
Procédé de préparation de perles de polymères styréniques expansibles

(30) Priorität: 13.06.1992 DE 4219379
(43) Veröffentlichungstag der Anmeldung: 22.12.1993
(73) Patentinhaber: HÜLS AKTIENGESELLSCHAFT, D-45764 Marl (DE)
(72) Erfinder: Holzmeier, Peter, Dr., W-4370 Marl (DE)

(56) Entgegenhaltungen:
- GB-A- 691 908
- US-A- 3 192 169

## Beschreibung

Die Erfindung betrifft ein Verfahren zur Herstellung teilchenförmiger treibmittelhaltiger Styrolpolymerisate (EPS) mit vermindertem Restmonomergehalt sowie deutlich verringerter Konzentration an Benzol in den Rohperlen.

Partikelschäume auf Basis von Styrolpolymerisaten haben im Verpackungssektor und vor allem als Wärmedämmstoff erhebliche technische Bedeutung erlangt. Ihre großtechnische Herstellung erfolgt durch Suspensionspolymerisation von Styrol in Gegenwart eines Treibmittels. Bei der Verarbeitung wird dieses expandierbare Styrolpolymerisat zunächst durch Erhitzen zu Schaumstoffpartikeln aufgeschäumt und anschließend in geschlossenen Formen zu Formkörpern verschweißt.

Die Suspensionspolymerisation von Styrol zur Herstellung expandierbarer Styrolpolymerisate wird gewöhnlich als diskontinuierlicher Prozeß in einem Verfahren mit zwei verschiedenen Temperaturstufen durchgeführt, wobei als Polymerisationsinitiatoren zwei Peroxide mit unterschiedlichen Halbwertszeiten Verwendung finden. Gewöhnlich verwendet man Dibenzoylperoxid während der ersten Stufe der Polymerisation bei 80 bis 90 °C sowie das höher zerfallende tert.-Butylperbenzoat während der zweiten Stufe der Polymerisation bei 105 bis 130 °C zur Erzielung eines möglichst niedrigen Restmonomergehalts.

Nachteilig bei diesem Verfahren ist, daß in den so gewonnenen expandierbaren Styrolpolymerisaten Benzol in Konzentrationen von 0,002 bis 0,01 Gewichtsprozent, üblicherweise von 0,003 bis 0,005 Gewichtsprozent enthalten ist. Von dieser Benzolmenge werden durch die thermische Behandlung der Styrolpolymerisate beim Verarbeitungsprozeß etwa 70 bis 80 % freigesetzt. Die Benzolkonzentration im fertigen Formkörper beträgt danach noch 0,0005 bis 0,001 Gewichtsprozent.

Der vorliegenden Erfindung lag daher die Aufgabe zugrunde, expandierbare Styrolpolymerisate mit deutlich verringertem Benzolgehalt herzustellen, um die unerwünschte Emission von Benzol während des Verarbeitungsprozesses zu vermeiden und die Herstellung von weitgehend benzolfreien Schaumstoff-Formkörpern zu ermöglichen.

Überraschend wurde nun gefunden, daß diese Aufgabe dadurch gelöst werden kann, daß bei der Suspensionspolymerisation von Styrol anstelle des zweiten Initiators ein anderes styrollösliches Peroxid eingesetzt wird. Als besonders geeignet haben sich hier aliphatische und cycloaliphatische Perketale, insbesondere 2.2-Bis-(tert.-butylperoxy)-butan und 1.1-Bis-(tert.-butylperoxy)-cyclohexan, sowie Monoperoxycarbonate, insbesondere tert.-Amylperoxy-(2-ethylhexyl)-carbonat und tert.-Butylperoxy-(2-ethylhexyl)-carbonat erwiesen.

Aus den beiden japanischen Offenlegungsschriften 56167706 und 60031536 ist die Verwendung mono- und difunktioneller nichtaromatischer Initiatoren bei der Suspensionspolymerisation von Styrol bereits bekannt. Grund für den Einsatz dieser Initiatoren ist hierbei jedoch nicht die Senkung der Konzentration an Benzol im Polymeren, sondern z. B. die Erzielung einer bestimmten Molekulargewichtsverteilung.

Erfindungsgemäß kann der Benzolgehalt der teilchenförmigen Styrolpolymerisate bei Verwendung eines der oben aufgeführten Initiatoren auf Werte < 0,0005 Gewichtsprozent reduziert werden; die daraus durch Aufschäumen hergestellten Schaumpolystyrol-Formkörper weisen Benzolkonzentrationen von < 0,0002 Gewichtsprozent auf.

Die erfindungsgemäßen teilchenförmigen Styrolpolymerisate zeichnen sich zudem durch einen im Vergleich zu herkömmlichen, mit tert.-Butylperbenzoat polymerisierten Produkten wesentlich geringeren Restmonomergehalt aus. Den deutlichsten Effekt zeigen dabei tert.-Amylperoxy-(2-ethylhexyl)-carbonat und 2.2-Bis(tert.-butylperoxy)butan, mit denen bei unverändertem Polymerisationsverfahrenszyklus Restmonomergehalte von < 0,04 Gewichtsprozent erhalten werden.

Gegenstand der Erfindung ist ein Verfahren zur Herstellung teilchenförmiger expandierbarer Styrolpolymerisate durch Polymerisation von Styrol in wäßriger Suspension bei Temperaturen von 80 bis 130 °C in Gegenwart der üblichen Suspensionsstabilisatoren und unter Zusatz von 3 bis 15 Gewichtsprozent eines C₃-C₆-Kohlenwasserstoffs als Treibmittel, bei dem als radikalbildende Polymerisationsinitiatoren 0,15 bis 0,5 Gewichtsprozent Dibenzoylperoxid oder ein von seiner Halbwertszeit vergleichbares Peroxid (genannt seien z. B. Dilauroylperoxid, Azoisobuttersäurenitril) sowie als höher zerfallendes Peroxid 0,05 bis 0,6 Gewichtsprozent, vorzugsweise 0,1 bis 0,4 Gewichtsprozent, eines der oben aufgeführten Peroxide verwendet wird.

Styrolpolymerisate im Sinn der Erfindung sind Polystyrol und Copolymerisate mit mindestens 50 Gewichtsprozent Styrol. Geeignete Comonomere sind z. B. α-Methylstyrol, kernhalogenierte Styrole, Acrylnitril, Ester der Acryl- und Methacrylsäure von Alkoholen mit 1 bis 8 Kohlenstoffatomen, N-Vinylverbindungen, wie z. B. N-Vinylcarbazol.

Als Treibmittel enthalten die expandierbaren Styrolpolymerisate 3 bis 15 Gewichtsprozent, vorzugsweise 5 bis 8 Gewichtsprozent, der bekannten, nur quellenden C₃- bis C₆-Kohlenwasserstoffe, wie Propan, Butan, Isobutan, n-Pentan, i-Pentan, Neopentan, Hexan und Cyclohexan oder Mischungen dieser Verbindungen.

Als Suspensionsstabilisatoren können in bekannter Weise organische Schutzkolloide, wie Polyvinylalkohol, Polyvinylpyrrolidon und Hydroxyethylcellulose, sowie wasserunlösliche Dispergatoren, wie fein verteiltes Tricalciumphosphat, Magnesiumoxid und Bariumphosphat, eingesetzt werden; auch Gemische aus organischen Schutzkolloiden und wasserunlöslichen Dispergatoren werden verwendet.

Die Styrolpolymerisate können auch übliche Zusätze von wirksamen Mengen anderer Stoffe enthalten, die den expandierbaren Produkten bestimmte Eigenschaften verleihen. Genannt seien beispielsweise Flammschutzmittel, wie Tetrabromcyclooctan, Hexabromcyclododecan, bromiertes Polybutadien, sowie Synergisten für Flammschutzmittel, wie Dicumylperoxid, und andere radikalbildende Stoffe mit einer Halbwertszeit von mindestens zwei Stunden bei 373 K.

Die expandierbaren Styrolpolymerisate können außerdem Zuschlagstoffe, wie Farb- und Füllstoffe, und Stabilisierungsmittel enthalten.

### Beispiel

In einem 600-l-Reaktor werden 240 kg Wasser, 400 g Hydroxyethylcellulose, 800 g Tricalciumphosphat und 24 g EDTA als Suspensionsmedium vorgelegt. Als organische Phase wird dazu einer Lösung von 960 g Dibenzoylperoxid und 480 g tert.-Butylperoxy-(2-ethylhexyl)-carbonat in 240 kg Styrol gegeben.

Die Mischung wird unter Rühren innerhalb von 1 Stunde auf 90 °C aufgeheizt und 3,5 Stunden auf dieser Temperatur gehalten. Danach wird mit 120 g Polyvinylalkohol nachstabilisiert und 20,4 kg Pentan innerhalb von 1 Stunde bei gleichzeitigem Aufheizen auf 110 °C zudosiert. Nach weiteren 6,5 Stunden Polymerisationszeit wird der Ansatz abgekühlt, über eine Nutsche ausgefahren und das teilchenförmige Polymerisat mit Wasser gewaschen, getrocknet und gesiebt.

| | |
|---|---|
| Ausbeute: | 253 kg |
| K-Wert: | 53,9 |
| Monostyrol: | 385 mg/kg |
| Benzol: | 4,7 mg/kg |
| Treibmittelgehalt: | 6,18 Gew.-% |
| Wassergehalt: | 0,09 Gew.-% |

## Patentansprüche

1. Diskontinuierliches Verfahren zur Herstellung von perlförmigen expandierbaren Styrol-Homo- oder -Copolymerisaten in wäßriger Suspension bei zwei verschiedenen Temperaturstufen,
dadurch gekennzeichnet,
daß bei der zweiten Temperaturstufe als Initiator ein aliphatisches oder cycloaliphatisches Perketal oder Monoperoxycarbonat eingesetzt wird.

2. Verfahren nach Anspruch 1,
dadurch gekennzeichnet,
daß als Perketal 2.2-Bis-(tert.-butylperoxy)-butan oder 1.1-Bis-(tert.-butylperoxy)-cyclohexan eingesetzt wird.

3. Verfahren nach Anspruch 1,
dadurch gekennzeichnet,
daß als Monoperoxycarbonat tert.-Amylperoxy-(2-ethylhexyl)-carbonat oder tert.-Butylperoxy-(2-ethylhexyl)-carbonat eingesetzt wird.

4. Verfahren nach Anspruch 1,
dadurch gekennzeichnet,
daß bei der ersten Temperaturstufe Dibenzoylperoxid verwendet wird.

5. Verfahren nach Anspruch 1,
dadurch gekennzeichnet,
daß die Polymerisation in der ersten Stufe bei 80 bis 90 °C und in der zweiten Stufe bei 105 bis 130 °C durchgeführt wird.

## Claims

1. A discontinuous process for the production of expandable styrene homopolymers or copolymers in bead form in aqueous suspension in two different temperature steps, characterised in that an aliphatic or cycloaliphatic perketal or monoperoxycarbonate is used as initiator in the second temperature step.

2. A process according to claim 1, characterised in that 2,2-bis(tert-butylperoxy)butane or 1,1-bis(tert-butylperoxy)cyclohexane is used as perketal.

3. A process according to claim 1, characterised in that 2-ethylhexyl tert-amylperoxycarbonate or 2-ethylhexyl tert-butylperoxycarbonate is used as monoperoxycarbonate.

4. A process according to claim 1, characterised in that dibenzoyl peroxide is used in the first temperature step.

5. A process according to claim 1, characterised in that the polymerisation is carried out at 80 to 90°C in the first step and at 105 to 130°C in the second step.

## Revendications

1. Procédé discontinu pour préparer des homopolymères ou des copolymères du styrène expansibles en forme de perles, en suspension aqueuse, à deux paliers de température différents, caractérisé en ce que, au deuxième palier de température, on utilise comme amorceur un monoperoxycarbonate ou un percétal aliphatique ou cycloaliphatique.

2. Procédé selon la revendication 1, caractérisé en ce qu'on utilise comme percétal le 2,2-bis-(tert-butylperoxy)-butane ou le 1,1-bis(tert-butylperoxy)-cyclohexane

3. Procédé selon la revendication 1, caractérisé en ce qu'on utilise comme monoperoxycarbonate du peroxy-(2-éthylhexyl)-carbonate de tert-amyle ou du peroxy-(2-éthylhexyl)-carbonate de tert-butyle.

4. Procédé selon la revendication 1, caractérisé en ce que, au premier palier de température, on utilise du peroxyde de dibenzoyle.

5. Procédé selon la revendication 1, caractérisé en ce que la polymérisation est mise en oeuvre pour le premier palier à une température de 80 à 90°C et pour le deuxième palier à une température de 105 à 130°C.
